# EUROPÄISCHE PATENTSCHRIFT

(11) **EP 2 084 431 B1**
(45) Veröffentlichungstag und Bekanntmachung des Hinweises auf die Patenterteilung: **24.02.2010**
(21) Anmeldenummer: 07821251.1
(22) Anmeldetag: 12.10.2007
(51) Int. Cl.: F16H 57/02, F16D 13/58

(54) **EINRICHTUNG ZUR KAPSELUNG VON KUPPLUNGS-FEINSTÄUBEN**
DEVICE FOR ENCLOSING FINE DUST FROM CLUTCHES
DISPOSITIF POUR CAPTURER LES POUSSIERES FINES GENEREES LORS DE L'UTILISATION D'EMBRAYAGES

(30) Priorität: 04.11.2006 DE 102006052101
(43) Veröffentlichungstag der Anmeldung: 05.08.2009
(73) Patentinhaber: ZF Friedrichshafen AG, 88038 Friedrichshafen (DE)
(72) Erfinder: HÄRDTLE, Wilhelm, 88677 Markdorf (DE)
(86) Internationale Anmeldenummer: PCT/EP2007/060884
(87) Internationale Veröffentlichungsnummer: WO 2008/052869

(56) Entgegenhaltungen:
- DE-A1- 4 008 402
- DE-A1- 19 911 578
- US-A- 5 349 884
- US-A- 6 008 965
- US-A1- 2006 060 025

## Beschreibung

Die vorliegende Erfindung bezieht sich auf eine Einrichtung zur Kapselung von Kupplungs-Feinstäuben gemäß dem Oberbegriff des Patentanspruchs 1.

Bei Fahrzeuggetrieben werden nach dem Stand der Technik üblicherweise Reibungskupplungen zwischen dem Motor und dem Getriebe eingesetzt. Hierbei verschleißen die eingesetzten Reibungskupplungen im Laufe des Fahrzeuglebens zum Teil mehrfach, wodurch erhebliche Volumen an Feinstäuben generiert und über Austrittsöffnungen über Verwirbelungen und andere Effekte in nachteiliger Weise in die Umwelt gebracht werden. Diese Stäube sind belastend, zum Teil toxisch und gefährden unter anderem die Gesundheit von Menschen insbesondere über die Lungenwege.

Aus der gattungsgemäßen DE 19911578 A1 der Anmelderin ist eine Vorrichtung zum Reinigen von Schmier- und Kühlflüssigkeiten in Bauteilen mit rotierenden Elementen, insbesondere von Zahnrädern in Getriebegehäusen bekannt. Hierbei sind den rotierenden Elementen Fliehkraftkammern zur Aufnahme und Ablagerung von Schmutz- und Abriebpartikeln zugeordnet. Des weiteren ist aus der US 5,349,884 ein System zum Montieren eines Staubschutzschildes an einem Kupplungsgehäuse bekannt.

Der vorliegenden Erfindung liegt die Aufgabe zugrunde, eine Einrichtung anzugeben, welche die Kapselung von Kupplungs-Feinstäuben auf einfache Weise ermöglicht.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird vorgeschlagen, die Feinstäube von Kupplungen aus Abrieben von Belägen zu kapseln und im Kupplungsgetrieberaum aufzunehmen, sodass diese nicht nach außen dringen können.

Durch die erfindungsgemäße Konzeption wird zudem das Eindringen von abrasiven Stäuben von außen verhindert, wodurch die Lebensdauer der Kupplung bei extremen Umweltbedingungen in vorteilhafter Weise erhöht wird.

Gemäß einer vorteilhaften Ausführungsform der Erfindung sind im Kupplungsgehäuse Kavernen vorgesehen, in denen die Feinstäube durch die rotationsbedingte Fliehkraft gesammelt werden. Im Rahmen einer vorteilhaften Weiterbildung ist vorgesehen, dass die in den Kavernen aufgenommenen Feinstäube über eine geeignete Entnahmemöglichkeit entnommen werden können. Die Entnahmemöglichkeit kann beispielsweise dadurch realisiert werden, dass jeder Kaverne ein Deckel zugeordnet ist, so dass durch Öffnen der Deckel die in den Kavernen aufgenommenen Feinstäube entnommen werden können.

Gemäß der Erfindung kann auch vorgesehen sein, dass zur Entnahme der in den Kavernen aufgenommenen Feinstäube, die Kavernen auf einem separaten Teil angeordnet sind, welches in Umfangsrichtung drehbar und/oder axial verschiebbar ist, so dass das die Kavernen aufweisende Teil als Ganzes entnommen werden kann. Dieses Teil ist vorzugsweise als Kreiszylinder ausgebildet, auf dem die Kavernen vorgesehen sind.

Die Erfindung wird im folgenden anhand der beigefügten Figuren, beispielhaft näher erläutert.

Es zeigen:
- Fig. 1: eine schematische Ansicht der Anordnung einer Reibungskupplung zwischen dem Antriebsmotor und dem Getriebe eines Kraftfahrzeugs sowie der Einrichtung zur Kapselung von Kupplungs-Feinstäuben und
- Fig. 2: eine Draufsicht auf einen Schnitt entlang der Linie A-A aus Fig. 1.

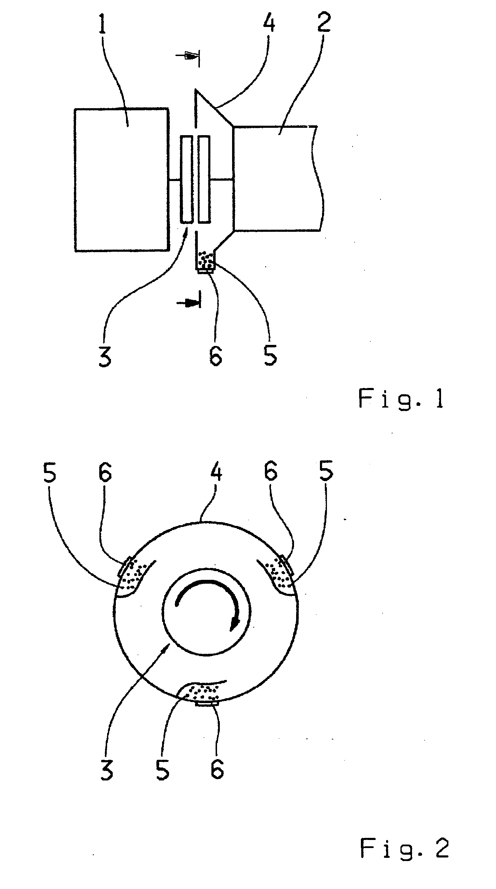

In Fig. 1 ist eine zwischen dem Antriebsmotor 1 und dem Getriebe 2 eines Kraftfahrzeugs angeordnete Reibungskupplung 3 dargestellt. Gemäß der Erfindung sind zur Kapselung von Kupplungs-Feinstäuben im Kupplungsgehäuse 4 Kavernen 5 vorgesehen, in denen die Feinstäube durch die rotationsbedingte Fliehkraft gesammelt werden. In den beigefügten Figuren wird der Feinstaub durch die in den Kavernen 5 gezeigten Punkte veranschaulicht.

In Fig. 2 ist die Drehrichtung der Kupplung durch den Pfeil veranschaulicht; aufgrund der rotationsbedingten Fliehkraft werden die Feinstäube in den Kavernen 5 gesammelt. Bei dem gezeigten Ausführungsbeispiel ist jeder Kaverne 5 ein Deckel 6 zugeordnet, wodurch die in den Kavernen 5 aufgenommenen Feinstäube auf einfache Weise entnommen werden können.

Durch die erfindungsgemäße Konzeption wird eine Einrichtung zur Verfügung gestellt, welche die Kapselung und anschließende Entnahme von Kupplungs-Feinstäuben auf einfache Weise ermöglicht.

### Bezugszeichen

- 1: Antriebsmotor
- 2: Getriebe
- 3: Reibungskupplung
- 4: Kupplungsgehäuse
- 5: Kaverne
- 6: Deckel

## Patentansprüche

1. Einrichtung zur Kapselung von Kupplungs-Feinstäuben, **dadurch gekennzeichnet, dass** sie im Kupplungsgehäuse (4) vorgesehene Kavernen (5) umfasst, in denen die Feinstäube durch die rotationsbedingte Fliehkraft gesammelt werden, wobei die in den Kavernen (5) aufgenommenen Feinstäube entnehmbar sind.

2. Einrichtung zur Kapselung von Kupplungs-Feinstäuben nach Anspruch 1, **dadurch gekennzeichnet, dass** jeder Kaverne (5) ein Deckel (6) zugeordnet ist, wobei durch Öffnen der Deckel (6) die in den Kavernen (6) aufgenommenen Feinstäube entnommen werden können.

3. Einrichtung zur Kapselung von Kupplungs-Feinstäuben nach Anspruch 1, **dadurch gekennzeichnet, dass** die Kavernen (5) auf einem separaten Teil angeordnet sind, welches in Umfangsrichtung drehbar und/oder axial verschiebbar ist, so dass das die Kavernen (5) aufweisende Teil als Ganzes entnommen werden kann.

4. Einrichtung zur Kapselung von Kupplungs-Feinstäuben nach Anspruch 1, **dadurch gekennzeichnet, dass** das die Kavernen (5) aufweisende Teil als Kreiszylinder ausgebildet ist.

## Claims

1. Device for the encapsulation of fine dusts from clutches, **characterized in that** it comprises caverns (5) which are provided in the clutch housing (4) and in which the fine dusts are collected as a result of the rotationally induced centrifugal force, the fine dusts received in the caverns (5) being removable.

2. Device for the encapsulation of fine dusts from clutches according to Claim 1, **characterized in that** each cavern (5) is assigned a cover (6), the fine dusts received in the caverns (6) being capable of being removed as a result of the opening of the covers (6).

3. Device for the encapsulation of fine dusts from clutches according to Claim 1, **characterized in that** the caverns (5) are arranged on a separate part which is rotatable in the circumferential direction and/or is axially displaceable, so that the part having the caverns (5) can be removed as a whole.

4. Device for the encapsulation of fine dusts from clutches according to Claim 1, **characterized in that** the part having the caverns (5) is designed as a circular cylinder.

## Revendications

1. Dispositif pour encapsuler les fines poussières d'embrayage, **caractérisé en ce qu'**il comprend des cavités (5) prévues dans le carter d'embrayage (4), dans lesquelles les fines poussières s'accumulent sous l'effet de la force centrifuge due à la rotation, les fines poussières reçues dans les cavités (5) pouvant être évacuées.

2. Dispositif pour encapsuler les fines poussières d'embrayage selon la revendication 1, **caractérisé en ce que** chaque cavité (5) est associée à un couvercle (6), les fines poussières reçues dans les cavités (6) pouvant être évacuées en ouvrant le couvercle (6).

3. Dispositif pour encapsuler les fines poussières d'embrayage selon la revendication 1, **caractérisé en ce que** les cavités (5) sont disposées sur une partie séparée, qui peut tourner dans le sens périphérique et/ou qui peut être déplacée axialement, de sorte que la partie présentant les cavités (5) puisse être enlevée d'un bloc.

4. Dispositif pour encapsuler les fines poussières d'embrayage selon la revendication 1, **caractérisé en ce que** la partie présentant les cavités (5) est réalisée sous forme de cylindre circulaire.
